# EUROPEAN PATENT SPECIFICATION

(11) **EP 0 617 721 B1**
(45) Date of publication and mention of the grant of the patent: **12.03.1997**
(21) Application number: 92924947.2
(22) Date of filing: 08.12.1992
(51) Int. Cl.: C08L 97/02

(54) **WOOD SUBSTITUTE BASED ON LIGNOCELLULOSIC AND INORGANIC MATERIALS, METHOD FOR OBTAINING THE SAME AND USE**
HOLZERSATZ AUF DER BASIS VON ANORGANISCHEN UND LIGNOCELLULOSE ENTHALTENDEN MATERIALIEN, VERFAHREN ZU SEINER HERSTELLUNG UND ANWENDUNG
SUBSTITUT DU BOIS BASE SUR DES MATERIAUX CELLULOSIQUES LIGNEUX ET INORGANIQUES, SON PROCEDE D'OBTENTION ET SON UTILISATION

(30) Priority: 18.12.1991 RO 148968
(43) Date of publication of application: 05.10.1994
(73) Proprietor: HODODI, Andrei, Sector 4, R-75207 Bucuresti (RO)
(72) Inventor: HODODI, Andrei, Sector 4, R-75207 Bucuresti (RO)
(74) Representative: Le Guen, Gérard
(86) International application number: PCT/RO92/00008
(87) International publication number: WO 93/12179

(56) References cited:
- DE-A- 944 686
- FR-A- 2 385 523
- GB-A- 1 395 105
- US-A- 2 502 498
- DATABASE WPIL Section Ch, Week 8839, Derwent Publications Ltd., London, GB; Class A, AN 88-275437 ; & JP-A-63 202 661

## Description

### Technical field

The invention refers to a woodsubstitute with lignino-cellulosic material and mineral particles which are moulded in sheets such as plates or panels of varied thicknesses or diverse forms, in stencil, using, at choice, wooden components, in pricipal, vegetals and cellulosics as splinters woodchips, sawdust and / or woodwool, dried leaves, paperwastes, cerealchaff, aquatic plants etc. with a binder and the obtaining method.

### Background of the invention

It is known a woodsubstitute, patent RO 37832, which, consists of a mixture composed of 500 kg / m³ ricechaff with or without wood massaddition, 70-80 kg / m³ technical urea, the ratio referring to the ricechaff volume.

The product consists in the fact that the ricechaff is artificially dried to 2 % humidity and then it is added non-diluted viscous Urelit C as adhesive, ammonium sulphate as accelerator and technical urea as inhibitor and then the whole stuff is mixed in a stirrer, in order to obtain a complete homogenizing, then it is poured as a carpet with 60-80 mm thickness and pressed with a pressing force between 2-6 kg/cm² during 15-25 minutes at a temperature between 130-150 °C in order to finish the polimerization process.

The product and the obtaining method present the disadvantage of a hard working and a limited using area, therefore it cannot be moulded in forms in order to obtain finished products.

In accordance with the patent FR 2578187 it is known another woodsubstitute and realization process, which has in its composition, resinbark and leaves tied together through a mineral binder which assures exclusively the cohesion, in order to obtain this product, the bark is grided or crushed at varied dimensions, then contacted with a mineral binder and a quantity of water which represents the difference between the necessary water quantity for a good setting of the bark used in the process.The mixture, bark, mineral binder and water is realized through the aid of a mechanic equipment then drained before the setting or pressed to obtain plates or panels.

The used mineral binders can be construction plasters, stencil plasters or hydraulic binders as Portland cement.

This product presents the disadvantage of some limited physical and mechanical characteristics and restricted using area.

Also the patent RO 9262 makes reference to a woodsubstitute realization method constituted of sawdust or splinters or a mixture of both these materials, with a possible addition of a fibred stuff, preferably peat, which are mixed with approximately 3-10% setting material which consists of albumin, preferably bloodalbumin, limestone and soluble glass to which it is added a necessary water quatity, then the mixture is pressed with a pressure over 100 atmospheres, at a temperature of 110 °C. In order to obtain the woodsubstitute, in accordance with this patent, are mixed approximately 450 kg sawdust or splinters with 12-20 kg bloodalbumin, 3-6 kg limestone, 3-6 kg soluble glass and 30-40 kg water, the obtained mixture being pressed at 140-150 atm a temperature of 110 °C in flat forms.

This product presents the disadvantage of some limited physical and mechanical properties, the impossibility to be moulded in profiled forms in order to obtain some final products and the using of a setting material such as bloodalbumin which is a shortcoming product.

### Summary of the invention

In accordance with my invention, the technical problem that must be solved consists in the obtaining of a woodsubstitute from raw cellulosic materials (lignino-cellulosic) with great diversity and with physical and mechanical properties superior in working and using to the natural wood.

In accordance with this invention the technical solution solves this problem, through that the woodsubstitute includes in the mixture tree leaves particles, sawdust, rottenwood particles splinters, paperwastes, roots, foragecultures, cerealerops, sorghumwastes, bark, stems, etc., being included among the mineral materials, limestone in sulphates form, carbonates, calcium oxides with synthetical binders of varied chemical structure with or without dyes, which proportions are included between 35-60 parts by weight wooden or cellulosic particles, 5-35 parts by weight limestone particles and between 5-30 parts by weight synthetic binders of varied harmless chemical structures to which is added 5-15 parts by weight of a product selected from bitumen foam, blast furnace cinder and thermopower ash with or without other addition required by necessity.

The method for producing this woodsubstitute consists, in the first phase, in drying the lignino-cellulosic materials, irrespective of their nature and dimensions, then are brought at equal dimensions through hashing, grinding and disintegration under pressure, the obtaining particles being then mixed in a ratio of 35-60 parts by weight lignino-cellulosic particles, 5-35 parts by weight limestone particles and with 5-60 parts by weight synthetic binders of varied chemical structure with or without other additions, during 10-40 minutes at a temperature between 5-30 °C till a perfect homogenizing, obtaining a paste of honeyviscosity, which is then moulded in flat or different other forms according with the destination, followed by a drying operation in a closed space at a temperature between 5-50 °C during 10-30 days, the humidity in the closed space being maximum 8% during the whole drying process.

Through the using of this woodsubstitute, in accordance with the invention, it is obtained a large scale of appliances, leading to the reduction of cost price, it is realized with minimum effort and does not require special endowments, presenting higher physical and mechanical properties then the natural wood and every other known woodsubstitute.It can be moulded in various forms, irrespective of the profiled surface, the obtained sheet can support subsequent workings, varying with the necessities and strainforces, presenting a chemical stability and a lasting homogenity of the material.

### Detailed Description of the Invention

The following lines will describe illustrative, but not limited examples of the manufacturing of this woodsubstitute according to the invention.

**First example**. It takes a mixture composed of rottenwood, bark and paperwastes (the ratio of the components varying between 17:50:33; 50:11:33 or 50:33:17) in proportion of 35-60 by parts by weight which are disintegrated under pressure after a preliminary treatment in order to destroy the possible microorganisms, obtaining particles with dimensions between 5 µm and 3 cm, after then it homogenizes through mixing with 10-15 parts by weight water, for 40 minutes together with 5-35 parts by weight limestone particles such as calcium carbonate (CaCO₃) to which it adds 5-30 parts by weight synthetic binder as melamin type or phenolformaldehydes Novolac type, 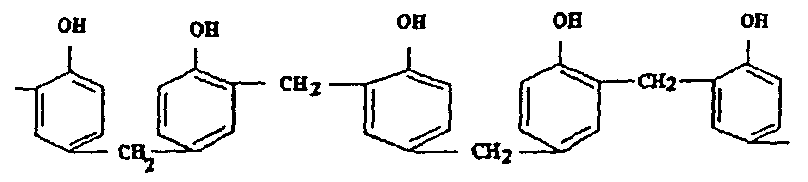 and 5-15 parts by weight fireproof products and thermoinsulators of varying types, i.e. bitum foam or blast furnace under a temperature of 30 °C until a honeyviscosity paste is obtained.

The paste thus obtained is moulded in flat forms or various profiles and submitted to drying at a temperature between 5-50 °C, preferably 45 °C in an atmosphere with 8% maximum humidity.The flat forms can be submitted to the pressing to obtain plates of varied thicknesses (between 5-60 mm) and dimensions in accordance with the form size.

**Second example.** It takes a mixture composed of growing forage wastes, sorghumwastes, stemplants (the ratio of the components varying between 10:30:60; 60:10:30 or 30:60:10) in proportion of 35-60 parts by weight it grinds and brings at equal dimensions between 1-4 cm, after then it adds 5-15 parts by weight water, 5-35 parts by weight limestone particles such as calcium carbonate (CaCO₃) to which then it adds 5-30 parts by weight synthetic binder of polystyrenic resins type, boneglue then it homogenizes through mixing during 35 minutes at a temperature of 25 °C then it adds 5-15 parts by weight fireproof products, antiphonals or thermalinsulators namely bitumen foams, blast furnace or thermal power station ash and continuing the homogenizing process for another 15 minutes until a honeyviscosity paste is obtained.

The paste thus obtained is moulded in flat or varied profiled forms being submitted to a drying at a temperature between 5-50 °C, preferably 50 °C in at atmosphere with 8% maximum humidity, in an interval of 10 to 30 days.

The flat forms can be submitted to the pressing in order to obtain plates of varied thicknesses between 5-60 mm and varied dimensions according to the sizeform.

The products thus obtained can have the following physical and mechanical characteristics:
- Specific weight varying with the necessities between 0,2-2 kg / dm³
- Static bending strength : 200-2200 daN / cm²
- Modulus of elasticity : 400-150.000 kgf / cm²
- Heat resistance :
   - weight loss ≤2 g
   - carbonized surface ≤10 cm
- Water absorption after 24 hours of immersion % max : 0,3-12 %
- Acoustic absorption :
   - as insulator : 13- >18
   - as acoustic insulator : 34- >43

## Claims

1. Woodsubstitute composed of cellulosic and mineral materials, synthetic binders, without or with dyes characterized in that it contains 35-60, parts by weight, ligno-cellulosic particles, 5-35 parts by weight limestone particles, 5-30 parts by weight synthetic binders, such as polyformaldehyde respectively β-polyoxymethylene to which is added 5-15 parts by weight, of product selected from bitumen foam, blast - furnace cinder and thermopower station ash.

2. Woodsubstitute according to claim 1 characterized in that ligno-cellulosic component comprises forage wastes, sorghum wastes and plant stems the ratio of these varying among 10:30:60, 60:10:30 and 30:60:10, parts by weight, or rotten wood, bark and paper wastes the ratio of these varying among 17:50:33, 50:17:33 and 50:33:17, parts by weight.

3. Method of preparing woodsubstitute comprising chopping of ligno-cellulosic materials, adding calcium carbonate and synthetic binder, homogenizing the obtained mixture and introducing it in a mould characterized in that it contains 35-60 parts by weight ligno-cellulosic particles, 5-35 parts by weight limestone particles and 5-30 parts by weight synthetic binders such as polyformaldehyde respectively β-polyoxymethylene with or without dyes, which are mixed at a temperature ranging among 5-30°C, during 10-40 minutes until a perfect homogenizing, then is added 5-15 parts by weight of a product selected from bitumen foam, blast-funace cinder and thermopower station ash and continuing the homogenizing still 15 minutes until a honey viscosity paste is obtained.

4. Method of preparing woodsubstitute according to claim 3 characterized in that in the primary preparation phase the ligno-cellulosic component comprises forage wastes, sorghum wastes and plant stems the ratios of these varying among 10:30:60, 60:10:30 and 30:60:10 parts by weight or rotten wood, bark and paper wastes the ratios of these varying among 17:50:33, 50:17:33 and 50:33:17, parts by weight,

## Patentansprüche

1. Holzersatz, bestehend aus Zellulosematerial und Mineralmaterial, synthetischem Bindemittel und eventuell Farbstoffen, dadurch gekennzeichnet, daß er 35-60 Gewichtsteile Ligno-Zellulose-Partikel, 5-35 Gewichtsteile Kalkstein-Partikel, 5-30 Gewichtsteile synthetisches Bindemittel, insbesondere Polyformaldehyd und/oder β-Polyoxymethylen, enthält, wobei 5-15 Gewichtsteile eines Produkts, ausgewählt aus der Gruppe: Bitumen-Schaum, Hochofen-Schlacke und Asche einer Wärme-Kraft-Station zugefügt ist.

2. Holzersatz gemäß Anspruch 1, dadurch gekennzeichnet, daß die Ligno-Zellulose Fütterabfälle, Zuckerrohrabfälle und Pflanzenstiele, wobei das Verhältnis dieser Komponenten zwischen 10:30:60, 60:10:30 und 30:60:10 Gewichtsteilen schwankt, oder verrottete(s) Holz, Rinde und Papierabfälle aufweist, wobei das Verhältnis dieser Komponenten zwischen 17:50:33, 50:17:33 und 50:33:17 Gewichtsteilen schwankt.

3. Verfahren zur Herstellung eines Holzersatzes, bei dem Ligno-Zellulose-Material zerkleinert, Kalzium-Karbonat und synthetisches Bindemittel zugefügt, die erhaltene Mischung homogenisiert und in eine Form gefüllt wird, dadurch gekennzeichnet, daß sie 35-60 Gewichtsteile Ligno-Zellulose-Partikel, 5-35 Gewichtsteile Kalkstein-Partikel und 5-30 Gewichtsteile synthetisches Bindemittel, insbesondere Polyformaldehyd und/oder β-Polyoxymethylen, und eventuell Farbstoff enthält, daß sie bei einer Temepratur zwischen 5° und 30°C 10-40 Minuten lang gemischt wird, bis sie völlig homogenisiert ist, daß dann 5-15 Gewichtsteile eines Produkts aus der Gruppe: Bitumen-Schaum, Hochofen-Schlacke und Asche einer Wärme-Kraft-Station zugefügt wird und daß die Homogenisierung noch 15 Minuten fortgesetzt wird, bis eine Paste mit Honig-Viskosität erhalten wird.

4. Verfahren zur Herstellung eines Holzersatzes gemäß Anspruch 3, dadurch gekennzeichnet, daß in der ersten Herstellungsphase die Ligno-Zellulose-Komponente Futterabfälle, Zuckerrohrabfälle und Pflanzenstiele, wobei das Verhältnis dieser Komponenten zwischen 10:30:60, 60:10:30 und 30:60:10 Gewichtsteilen schwankt, oder verrottete(s) Holz, Rinde und Papierabfälle aufweist, wobei das Verhältnis dieser Komponenten zwischen 17:50:33, 50:17:33 und 50:33:17 Gewichtsteilen schwankt.

## Revendications

1. Substitut du bois composé de matières cellulosiques et minérales, de liants synthétiques, avec ou sans colorants, caractérisé en ce qu'il contient 35 à 60 parties en poids de particules lignocellulosiques, 5 à 35 parties en poids de particules de calcaire, 5 à 30 parties en poids de liants synthétiques, tels qu'un polyformaldéhyde, comme le β-polyoxyméthylène, auxquels on a ajouté 5 à 15 parties en poids d'un produit choisi parmi une mousse bitumineuse, des scories de haut fourneau et des cendres de centrale thermique.

2. Substitut du bois selon la revendication 1, caractérisé en ce que le composant lignocellulosique comprend des résidus de fourrage, des résidus de sorgho et des tiges de plantes dont le rapport varie entre 10/30/60, 60/10/30 et 30/60/10 parties en poids, ou du bois putrifié, de l'écorce et des résidus de papier dont le rapport varie entre 17/50/33, 50/17/33 et 50/33/17 parties en poids.

3. Procédé pour préparer un substitut du bois comprenant le découpage de matières lignocellulosiques, l'addition de carbonate de calcium et d'un liant synthétique, l'homogénéisation du mélange obtenu et son introduction dans un moule, caractérisé par une teneur de 35 à 60 parties en poids de particules lignocellulosiques, 5 à 35 parties en poids de particules de calcaire et 5 à 30 parties en poids de liants synthétiques, tels qu'un polyformaldéhyde comme le β-polyoxyméthylène, avec ou sans colorants, que l'on mélange à une température comprise dans la gamme de 5 à 30°C pendant 10 à 40 minutes jusqu'à homogénéisation parfaite, puis l'addition de 5 à 15 parties en poids d'un produit choisi parmi une mousse bitumineuse, des scories de haut fourneau et des cendres de centrale thermique, et la poursuite de l'homogénéisation pendant 15 minutes jusqu'à obtention d'une pâte ayant la viscosité du miel.

4. Procédé de préparation d'un substitut du bois selon la revendication 3, caractérisé en ce que, dans la phase primaire de préparation, le composant lignocellulosique est constitué de résidus de fourrage, de résidus de sorgho et de tiges de plantes dont les rapports varient entre 10/30/60, 60/10/30 et 30/60/10 parties en poids, ou du bois putréfié, de l'écorce et des résidus de papier dont les rapports varient entre 17/50/33, 50/17/33 et 50/33/17 parties en poids.
